# EUROPÄISCHE PATENTANMELDUNG

(11) **EP 0 597 143 A1**
(43) Veröffentlichungstag der Anmeldung: **18.05.1994**
(21) Anmeldenummer: 92119324.9
(22) Anmeldetag: 12.11.1992
(51) Int. Cl.: G06F 15/403

(54) **Befehlsverarbeitung bei einem Datenbanksystem**

(71) Anmelder: International Business Machines Corporation, Armonk, N.Y. 10504 (US)
(72) Erfinder: Erbe, Rolf, W-6932 Hirschhorn 2 (DE)
(74) Vertreter: Schäfer, Wolfgang, Dipl.-Ing.

(57) **Zusammenfassung**

Es wird ein Datenbanksystem beschrieben, bei dem dynamische Befehle effektiver verarbeitet werden. Zu diesem Zweck werden in den Speichermitteln des Computersystems eine Ergebnistabelle und eine Buchführungstabelle angelegt. Bei einem dynamischen SQL Befehl werden PREPARE und DESCRIBE nicht ausgeführt, wenn diese Anweisungen schon einmal bei einem vorhergehenden identischen dynamischen Befehl ausgeführt worden sind. Dies wird mit Hilfe von Eintragungen in der Buchführungstabelle überprüft. Ist der dynamische Befehl schon einmal ausgeführt worden, so werden die im Rahmen der früheren Ausführung von PREPARE und DESCRIBE erhaltenen Ergebnisse im vorliegenden relevanten dynamischen Befehl wiederverwendet. Ist der vorliegende dynamische Befehl früher noch nicht ausgeführt worden, so werden PREPARE und DESCRIBE durchlaufen und die erhaltenen Ergebnisse werden zur späteren Verwendung in der Ergebnistabelle abgespeichert. Außerdem werden die zugehörigen Eintragungen in der Buchführungstabelle vorgenommen.

## Beschreibung

Die Erfindung betrifft ein Verfahren zur Verarbeitung eines Befehls einer Standardabfragesprache für eine Datenbank durch ein Computersystem mit Speichermitteln, wobei der Befehl während der Verarbeitung eine Vorbereitungsphase und eine Ausführungsphase durchläuft, und wobei die Ausführungsphase Ergebnisse der Vorbereitungsphase verwendet.

Derartige Computersysteme, bei denen eine Standardabfragesprache, zum Beispiel SQL (Structured Query Language), für die Abfrage einer Datenbank, insbesondere einer relationalen Datenbank, benutzt wird, sind allgemein bekannt. Ein Benutzer kann mit Hilfe der Standardabfragesprache diejenigen Anforderungen formulieren, mit denen er Daten aus der Datenbank zusammenstellen will. Zu diesem Zweck stellt die Standardabfragesprache dem Benutzer Befehle zur Verfügung, die vom Benutzer an seine speziellen Anforderungen angepaßt werden können.

Nachfolgend sind Beispiele solcher Befehle in der Standardabfragesprache SQL angegeben:
SELECT attrlist FROM tabname WHERE ...
INSERT INTO tabname (attrlist VALUES ...
DELETE FROM tabname WHERE ...

Mit dem SELECT Befehl kann die Datenbank abgefragt werden. "tabname" ist der Name derjenigen Tabelle in der Datenbank, auf die die Abfrage beschränkt werden soll. "attrlist" ist eine Liste all derjenigen Attribute, die dem Benutzer ausgegeben werden sollen (SELECT) oder deren Werte eingefügt werden sollen (INSERT), wobei es sich bei einem Attribut um den Namen einer Spalte einer Tabelle der Datenbank handelt. Mit Hilfe von WHERE kann der Benutzer die Anforderungen oder Bedingungen festlegen, unter denen die Daten aus der Datenbank ausgelesen werden sollen. Mit Hilfe von VALUES kann der Benutzer Werte angeben, die unter den mit "attrlist" angegebenen Attributen in die Datenbank eingefügt werden sollen.

Bei SQL wird zwischen statischen und dynamischen Befehlen unterschieden. Bei statischen Befehlen wird der gesamte Befehl vor dem Start der Datenbankabfrage vom Benutzer endgültig festgelegt. Bei dynamischen Befehlen hingegen wird vom Benutzer nur ein Gerüst für einen Befehl vorgegeben, das erst nach dem Start der Datenbankabfrage gefüllt und damit der Befehl endgültig festgelegt wird.

Ein Beispiel für einen statischen Befehl ist: SELECT MITARBEITERNAME FROM GEHALT WHERE KINDERZAHL=₃ Bei diesen Befehl sollen aus einer Tabelle mit dem Namen GEHALT all diejenigen MITARBEITERNAMEN herausgelesen werden, bei denen die Bedingung KINDER-ZAHL = erfüllt ist.

Bei einem entsprechenden dynamischen Befehl sind beispielsweise der Name der Tabelle und die gewünschten Attribute nicht fest vorgegeben, sondern durch irgendwelche Platzhalter besetzt, die dann zur sogenannten Run Time vor der eigentlichen Ausführung der Datenbankabfrage durch einen bestimmten Namen einer Tabelle und durch bestimmte Attribute ersetzt werden. Es versteht sich, daß bei einem dynamischen Befehl durch eine entsprechende Belegung der Platzhalter derselbe Befehl entstehen kann wie bei einem statischen Befehl.

Die Verarbeitung von statischen und dynamischen Befehlen ist grundsätzlich verschieden. Statische Befehle werden vor dem Start der Datenbankabfrage, also vor der sogenannten Run Time, mit Hilfe eines Übersetzungsprogramms, eines sogenannten Compilers oder Pre-Compilers, vollständig in eine für das Computersystem lesbare Form umgewandelt. Dies ist ohne weiteres möglich, da bei einem statischen Befehl keine Platzhalter vorhanden sind und somit alle für die Umwandlung erforderlichen Informationen bekannt sind.

Bei dynamischen Befehlen ist dies nicht der Fall. Dort sind vor dem Start der Datenbankabfrage noch Platzhalter und damit nicht alle für eine Umwandlung erforderlichen Informationen vorhanden.

Wie erläutert, werden bei dynamischen Befehlen die Platzhalter erst zur sogenannten Run Time durch spezielle Werte ersetzt. Dies hat zur Folge, daß bei dynamischen Befehlen eine Umwandlung durch das Übersetzungsprogramm vor der Run Time nicht vollständig erfolgen kann.

Statt dessen werden bei dynamischen Befehlen zur Run Time zunächst die durch die Platzhalter gekennzeichneten unvollständigen Stellen des Datenbankbefehls durch konkrete aktuelle Werte ersetzt. Danach beginnt die eigentliche Vorbereitungsphase. In dieser Vorbereitungsphase wird der zur Run Time komplettierte dynamische Datenbankbefehl in eine vom Computersystem ausführbare Form umgewandelt und somit für die Ausführung vorbereitet (bei SQL: PREPARE). Im Falle eines SELECT Befehls gehört noch die Bereitstellung der Beschreibung der Struktur des zu erwartenden Anfrageergebnisses in die Vorbereitungsphase (bei SQL: DESCRIBE).

Nach erfolgreich abgeschlossener Vorbereitungsphase wird die eigentliche Ausführung des Datenbankbefehls durchgeführt. Im Falle eines SELECT Befehls geschieht dies bei SQL durch OPEN, FETCH und CLOSE Anweisungen, mit denen der Benutzer die Verarbeitung des Anfrageergebnisses startet sowie die sequentielle Abarbeitung eröffnet, die einzelnen Teilergebnisse verarbeitet und schließlich die Verarbeitung beendet.

Bei dynamischen Befehlen erfolgt also im Unterschied zu statischen Befehlen zur Run Time, und zwar in einer Vorbereitungsphase vor der eigentlichen Ausführungsphase, die eigentliche Interpretation und Übersetzung des Befehls. Des weiteren werden in dieser Vorbereitungsphase die Speichermittel des Computersystems auf die eigentliche Datenbankabfrage vorbereitet, insbesondere werden die erforderlichen Bereiche in den Speichermitteln für die zu erwartenden Daten der Datenbankabfrage reserviert. Die Ergebnisse der Vorbereitungsphase werden in den Speichermitteln des Computersystems abgespeichert und können auf diese Weise dann von der eigentlichen Ausführungsphase weiterverwendet werden.

Diese zusätzliche Vorbereitungsphase ist bei jedem dynamischen Befehl erforderlich. Es ist ersichtlich, daß die Vorbereitungsphase einschließlich der Vorbereitung der Speichermittel des Computersystems auf die zu erwartenden Daten zusätzliche Rechenzeit erfordert. Je komplexer der dynamische Befehl ausgestaltet ist, desto größer kann die zusätzliche Rechenzeit werden.

Aufgabe der Erfindung ist es, die Verarbeitung von dynamischen Befehlen insbesondere hinsichtlich des erforderlichen Rechenzeitaufwands zu verbessern.

Gelöst wird diese Aufgabe erfindungsgemäß dadurch, daß bei einem Verfahren der eingangs genannten Art vor der Vorbereitungsphase für den relevanten Befehl geprüft wird, ob ein identischer Befehl früher schon einmal eine Vorbereitungsphase durchlaufen hat, und daß, falls die Prüfung positiv ist, für den relevanten Befehl keine erneute Vorbereitungsphase abläuft, sondern die Ausführungsphase mit den abgespeicherten Ergebnissen der früheren Vorbereitungsphase durchlaufen wird.

Wurde für einen bestimmten Befehl die Vorbereitungsphase früher schon einmal durchlaufen, so wird erfindungsgemäß ein weiterer Durchlauf der Vorbereitungsphase bei einem identischen Befehl vermieden. Statt dessen wird direkt auf die Ergebnisse des früheren Durchlaufs der Vorbereitungsphase zurückgegriffen, und die Ausführungsphase wird auf der Basis dieser Ergebnisse durchgeführt. Der an sich erforderliche Rechenzeitaufwand für den Durchlauf der Vorbereitungsphase wird somit erfindungsgemäß eingespart. Die erforderliche Rechenzeit für die Verarbeitung des relevanten Befehls ist somit wesentlich verkürzt.

Wurde hingegen für einen bestimmten Befehl die Vorbereitungsphase früher nicht schon einmal durchlaufen, so wird für den Befehl die Vorbereitungsphase wie bisher durchlaufen. Die Ergebnisse dieser Vorbereitungsphase werden in den Speichermitteln des Computersystems abgespeichert, so daß auf diese Ergebnisse bei einem späteren identischen Befehl auf die erfindungsgemäße Art und Weise zurückgegriffen werden kann.

Wie erläutert, wird erfindungsgemäß vor der Vorbereitungsphase geprüft, ob ein identischer Befehl früher schon einmal eine Vorbereitungsphase durchlaufen hat. Diese Prüfung baut darauf auf, daß Merkmale aus dem relevanten Befehl ermittelt werden. Diese Merkmale werden mit früher auf entsprechende Weise ermittelten und in den Speichermitteln des Computersystems abgespeicherten Merkmalen verglichen. Die Entscheidung, ob eine identischer Befehl früher schon einmal eine Vorbereitungsphase durchlaufen hat, hängt dann von dem Ergebnis dieses Vergleichs ab.

Ist der Vergleich positiv, so bedeutet dies, daß der Befehl früher schon einmal eine Vorbereitungsphase durchlaufen hat. In diesem Fall wird erfindungsgemäß die Ausführungsphase mit den abgespeicherten Ergebnissen der früheren Vorbereitungsphase durchlaufen. Des weiteren werden erfindungsgemäß in diesem Fall die ermittelten Merkmale des relevanten Befehls nicht erneut abgespeichert, da diese Merkmale ja bereits vorhanden sind. Dies stellt eine weitere Verbesserung der Verarbeitung des relevanten Befehls dar sowie gleichzeitig eine Verringerung des erforderlichen Speicherplatzes in den Speichermitteln des Computersytems.

Ist der Vergleich hingegen negativ, so bedeutet dies, daß der Befehl nicht schon früher einmal eine Vorbereitungsphase durchlaufen hat. Der Befehl ist also insoweit "noch nicht dagewesen". In diesem Fall werden die ermittelten Merkmale des Befehls in den Speichermitteln des Computersystems abgespeichert. Wie erläutert, werden in diesem Fall erfindungsgemäß auch die Ergebnisse der durchlaufenen Vorbereitungsphase in den Speichermitteln abgespeichert.

Mit Hilfe der nunmehr abgespeicherten Merkmale des Befehls kann erfindungsgemäß später erkannt werden, wenn ein identischer Befehl vorliegt, mit der daraus sich ergebenden Möglichkeit, bei dem späteren Befehl den Durchlauf der Vorbereitungsphase durch Verwendung der abgespeicherten Ergebnisse einzusparen.

Wie erläutert, werden bei negativer Prüfung die ermittelten Merkmale des relevanten Befehls sowie die Ergebnisse der durchlaufenen Vorbereitungsphase dieses Befehls in den Speichermitteln des Computersystem abgespeichert. Erfindungsgemäß werden diejenigen Merkmale und diejenigen Ergebnisse, die zu ein und demselben Befehl gehören, einander zugeordnet. Dies kann beispielsweise dadurch erfolgen, daß jedem zu verarbeitenden Datenbankbefehl eine eindeutige Befehlsnummer zugeordnet wird, mit deren Hilfe sowohl die Befehlsmerkmale als auch die zugehörigen Ergebnisse der Vorbereitungsphase identifiziert und angesprochen werden können.

Erfindungsgemäß enthalten die Speichermittel des Computersystems einerseits die Merkmale von Befehlen, die früher schon einmal eine Vorbereitungsphase durchlaufen haben, sowie andererseits die Ergebnisse derartiger früher durchlaufener Vorbereitungsphasen. Bei den Merkmalen kann es sich im Zusammenhang mit SQL beispielsweise um Namen von Tabellen der Datenbank handeln, auf die sich der relevante Befehl beziehen soll, und um Attribute, die an den Benutzer ausgegeben werden sollen oder die durch den Befehl geändert werden sollen. Bei den Ergebnissen kann es sich bei SQL beispielsweise um Informationen über den Befehl handeln, der die Vorbereitungsphase durchlaufen hat, oder über die Art und Weise, wie die Speichermittel des Computersystem freigehalten werden müssen, um die Daten, die sich aus der Datenbankabfrage ergeben, aufnehmen zu können.

Weitere Ausgestaltungen und Vorteile der Erfindung ergeben sich aus der nachfolgenden Beschreibung von in der Zeichnung dargestellten erfindungsgemäßen Ausführungsbeispielen.
Fig. 1 zeigt die erfindungsgemäße Verarbeitung eines dynamischen Befehls einer Standardabfragesprache durch ein Computersystem am Beispiel eines SQL SELECT Befehls;
Fign. 2a und 2b zeigen Tabellen, die in Speichermitteln des Computersystems abgespeichert sind, und die für die Verarbeitung des dynamischen Befehls erfindungsgemäß erforderlich sind; und
Fig. 3 zeigt schematisch die erfindungsgemäße Prüfung, mit der die Verarbeitung des dynamischen Befehls wesentlich verbessert wird.

Dem nachfolgend beschriebenen Ausführungsbeispiel liegt die Standardabfragesprache SQL für die Abfrage einer Datenbank zugrunde. Es wird davon ausgegangen, daß ein dynamischer Befehl dem Computersystem zur Verarbeitung vorliegt, mit dem eine Datenbank nach bestimmten Inhalten abgefragt werden soll. Dieser dynamische Befehl kann bekannterweise nicht wie ein statischer Befehl mit Hilfe eines Compilers übersetzt und dann vom Computersystem ausgeführt werden.

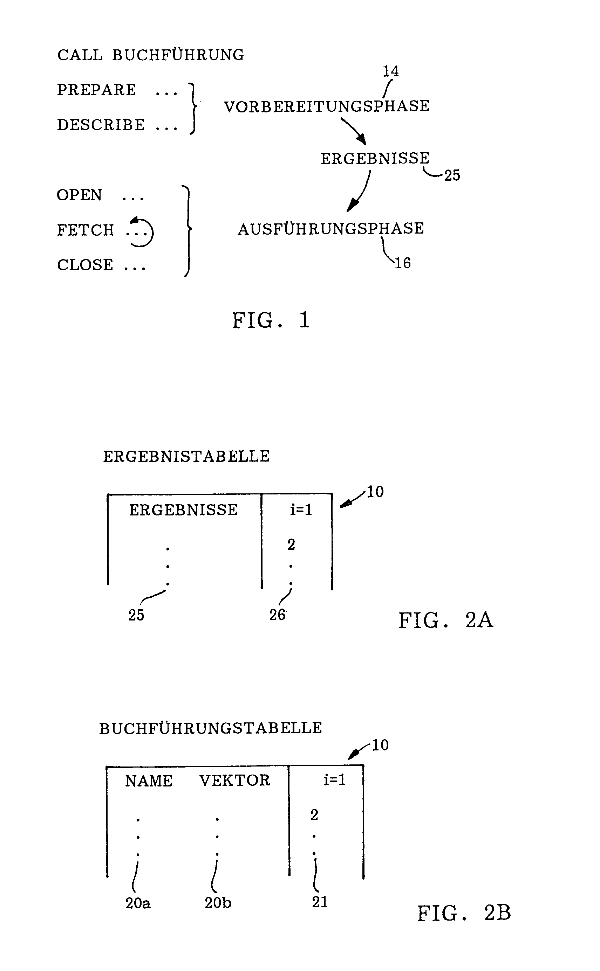

Wie aus der Fig. 1 hervorgeht, wird bei einem dynamischen Befehl zur Run Time zuerst eine Vorbereitungsphase 14 und dann eine Ausführungsphase 16 vom Computersystem durchlaufen. Die Vorbereitungsphase 14 erzeugt Ergebnisse 25, die in der nachfolgenden Ausführungsphase 16, dem eigentlichen Datenbankzugriff, weiterverwendet werden.

Die Vorbereitungsphase 14 kann beispielsweise die Anweisungen PREPARE und DESCRIBE aufweisen. Durch PREPARE wird der zur Run Time vervollständigte Datenbankbefehl übersetzt und in eine lauffähige Form überführt. Durch DESCRIBE wird im Falle eines SELECT Befehls die Beschreibung der zu erwartenden Ergebnismenge zur Verfügung gestellt, mit deren Hilfe die Speichermittel 10, die das Ergebnis des Datenbankbefehls aufnehmen werden, angelegt werden können. Die Ausführungsphase 16 kann z.B. die Anweisungen OFEN, FETCH und CLOSE aufweisen, mit deren Hilfe dann der eigentliche Datenbankzugriff erfolgt.

Bei den Ergebnissen 25 handelt es sich um den in der Vorbereitungsphase 14 vervollständigten und in eine ausführbare Form gebrachten Datenbankbefehl. Die Ergebnisse 25 sind abhängig von dem dynamischen Befehl, der zur Verarbeitung ansteht. Des weiteren enthalten die Ergebnisse 25 alle Informationen, die zur Durchführung der eigentlichen Datenbankabfrage in der Durchführungsphase 16 erforderlich sind.

Die Ergebnisse 25 sind in den Speichermitteln 10 des Computersystems abgespeichert. Dies ist in der Fig. 2a in der Form einer Ergebnistabelle dargestellt. Jedem Ergebnis 25 ist ein Index 26 zugeordnet, der entweder zusätzlich abgespeichert ist, oder der über die Adressen der einzelnen Ergebnisse 25 sich ergibt, oder der über die Reihenfolge der aufeinanderfolgenden Ergebnisse 25 festgelegt ist.

Des weiteren ist gemäß der Fig. 2b eine Buchführungstabelle in den Speichermitteln 10 des Computersystems abgespeichert, in der ein Name 20a und ein Vektor 20b sowie ein Index 21 enthalten sind. Auf den Namen 20a und den Vektor 20b wird noch näher eingegangen werden. Der Index 21 ist eine eindeutig vorgegebene Befehlsnummer und entspricht dem Index 26, d.h. das Ergebnis 25 mit beispielsweise dem Index 26 "i=2" ist dem Namen 20a und dem Vektor 20b mit demselben Index 21 "i = 2" zugeordnet.

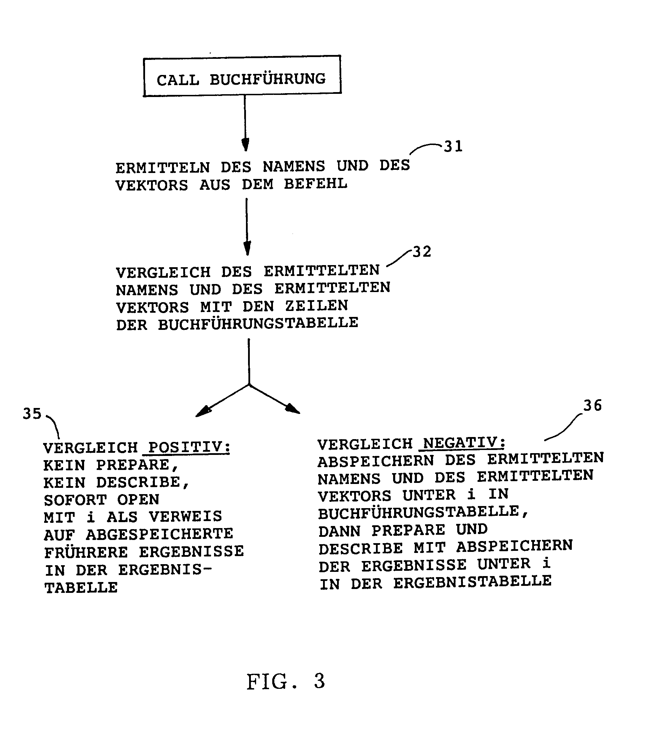

Wie sich aus der Fig. 1 ergibt, wird vor der Vorbereitungsphase 14 ein Befehl CALL BUCHFÜHRUNG ausgeführt. Mit Hilfe dieses Befehls wird insbesondere die Buchführungstabelle der Fig. 2b geprüft und gegebenenfalls mit weiteren Werten aufgefüllt. Dies ist nachfolgend anhand der Fig. 3 erläutert.

Nach der Fig. 3 wird in einem ersten Schritt 31 des Befehls CALL BUCHFÜHRUNG aus dem vorliegenden, relevanten Befehl der zugehörige Name mit zugehörigem Vektor ermittelt.

Der Name ergibt sich aus der in dem Befehl angesprochenen Datenbanktabelle, auf die sich die Datenbankabfrage bezieht. Dieser Name wird aus dem dynamischen Befehl ermittelt und in den Speichermitteln 10 zwischengespeichert. Bei dem zu dem Befehl zugehörigen Vektor handelt es sich um einen Bitvektor, der beispielsweise eine Länge von 255 Bits aufweisen kann. In diesem Bitvektor stellt jedes Bit ein bestimmtes Attribut dar, das in einem dynamischen Befehl enthalten sein kann. Die tatsächlich in dem relevanten Befehl enthaltenen Attribute werden von dem Computersystem ermittelt und entsprechend in dem Bitvektor beispielsweise durch eine binäre "1 markiert. Dieser ermittelte Vektor wird ebenfalls in den Speichermitteln 10 zwischengespeichert.

In einem zweiten Schritt 32 wird der im Schritt 31 ermittelte und zwischengespeicherte Name und der ebenfalls im Schritt 31 ermittelte und zwischengespeicherte Vektor mit den in der Buchführungstabelle gespeicherten Namen 20a und Vektoren 20b verglichen.

Handelt es sich beispielsweise um den ersten dynamischen Befehl, der von dem Computersystem verarbeitet werden soll, oder handelt es sich um einen dynamischen Befehl, der zum ersten Mal auftritt, der also bisher noch nicht in dieser Form verarbeitet worden ist, so hat der Vergleich ein negatives Ergebnis zur Folge, da in der Buchführungstabelle der Fig. 2b der ermittelte Name und der ermittelte Vektor des relevanten Befehls nicht enthalten sein können.

In diesem Fall wird das Verfahren mit dem Schritt 36 der Fig. 3 fortgesetzt. Der aus dem relevanten Befehl ermittelte Name und der ermittelte Vektor werden in der Buchführungstabelle der Fig. 2b abgespeichert, und zwar unter dem ersten freien Index 21, unter dem bisher noch keine Informationen abgespeichert worden sind. Handelt es sich beispielsweise um den ersten vom Computersystem zu verarbeitenden dynamischen Befehl, so werden der ermittelte Name und der ermittelte Vektor unter dem Index 21 "i = 1" als Name 20a und als Vektor 20b in die Buchführungstabelle der Fig. 2b eingetragen und abgespeichert.

Danach führt das Computersystem gemäß der Fig. 1 die Vorbereitungsphase 14 aus, also die Anweisungen PREPARE und DESCRIBE. Wie bereits erläutert wurde, liefert diese Vorbereitungsphase 14 bestimmte Ergebnisse 25, die von dem ausgeführten Befehl abhängen und die in der Ergebnistabelle der Fig. 2a abgespeichert werden. Entsprechend dem Schritt 36 der Fig. 3 werden diese Ergebnisse 25 unter demjenigen Index 26 abgelegt, der dem Index 21 entspricht, unter dem der aus demselben Befehl ermittelte Name 20a und der Vektor 20b abgespeichert worden sind. Der Index 26 für die Ergebnisse 25 des relevanten, vom Computersystem abzuarbeitenden dynamischen Befehls stimmt somit mit dem Index 21 desselben Befehls überein.

Es wird nunmehr angenommen, daß in der Ergebnistabelle der Fig. 2a und in der Buchführungstabelle der Fig. 2b bereits Eintragungen enthalten sind, daß also Ergebnisse 25 sowie Namen 20a und Vektor 20b mit einander zugeordneten Indices 21, 26 in den Speichermitteln 10 des Computersystems abgespeichert sind.

In diesem Fall ist es möglich, daß der Vergleich des ermittelten Namens und des ermittelten Vektors mit einem der in der Buchführungstabelle der Fig. 2b abgespeichertem Namen 20a und Vektoren 20b übereinstimmt. In diesem Fall wird das Verfahren mit dem Schritt 35 fortgesetzt.

Gemäß der Fig. 3 werden im Schritt 35 die Anweisung PREPARE und die Anweisung DESCRIBE nicht ausgeführt. Statt dessen wird die Verarbeitung des relevanten dynamischen Befehls sofort mit der Anweisung OPEN fortgesetzt. Dabei wird über den Index 21, unter dem in der Buchführungstabelle der Fig. 2b der übereinstimmende Name 20a und Vektor 20b gefunden wurden, die Verknüpfung zu den in der Ergebnistabelle der Fig. 2a abgespeicherten Ergebnissen 25 hergestellt.

Statt derjenigen Ergebnisse, die sich normalerweise aus dem Durchlauf der Anweisungen PREPARE und DESCRIBE ergeben würden, werden nunmehr die Ergebnisse 25 aus der Ergebnistabelle der Fig. 2a genommen, und zwar diejenigen, die unter dem zu dem relevanten Index 21 zugehörigen Index 26 abgespeichert sind. Da diese Ergebnisse 25 aufgrund des übereinstimmenden Namens 20a und des übereinstimmenden Vektors 20b mit den sich normalerweise ergebenden Ergebnissen identisch sind, können diese Ergebnisse 25 bei der Durchführung der Anweisung OPEN sowie der nachfolgenden Anweisungen FETCH und CLOSE verwendet werden, ohne daß sich dadurch eine Veränderung oder gar ein Fehler ergeben würde.

Im dem beschriebenen Fall des positiven Vergleichs des Schrittes 32, also bei Ausführung des Schrittes 35, werden der ermittelte Name und der ermittelte Vektor nicht erneut in der Buchführungstabelle der Fig. 2b abgespeichert. Das gleiche gilt für die zugehörigen Ergebnisse 25 der Ergebnistabelle der Fig. 2a. Dies ist auch nicht erforderlich, da ja diese Informationen bereits in den beiden genannten Tabellen enthalten sind.

Bei allen nachfolgenden dynamischen Befehlen wird das beschriebene Verfahren entsprechend ausgeführt. Es werden also der zu dem relevanten Befehl gehörige Name sowie der zugehörige Vektor ermittelt und mit dem Inhalt der Buchführungstabelle der Fig. 2b verglichen. Bei positivem Vergleich werden die über die Indices 21, 26 zugehörigen Ergebnisse 25 aus der Ergebnistabelle der Fig. 2a für die weitere Ausführung des dynamischen Befehls herangezogen. Die Anweisungen PREPARE und DESCRIBE werden nicht ausgeführt. Bei negativem Vergleich werden der ermittelte Name und Vektor in die Buchführungstabelle der Fig. 2b abgespeichert. Die Ausführung des dynamischen Befehls wird wie üblich mit den Anweisungen PREPARE und DESCRIBE fortgesetzt, wobei die Ergebnisse dieser beiden Befehle in der Ergebnistabelle der Fig. 2a unter dem zugeordneten Index 26 abgelegt werden.

Theoretisch können die Buchführungstabelle der Fig. 2b und die Ergebnistabelle der Fig. 2a beliebig lang ausgestaltet sein. In der Praxis stellen jedoch die zur Verfügung stehenden Speichermittel 10 Grenzen für die Länge dieser beiden Tabellen dar. Es gibt nun verschiedene Möglichkeiten, die Länge der beiden Tabellen zu begrenzen. Dies kann beispielsweise dadurch geschehen, daß die Tabellen nach dem Erreichen einer vorgegebenen Anzahl von Einträgen nach dem Prinzip "First-In-First-Out" begrenzt werden, daß also bei einem weiteren Eintrag der zeitlich älteste Eintrag einfach überschrieben wird.

Es ist jedoch auch möglich und vorteilhaft, ein sogenanntes "Least-Recently-Used" Prinzip zu verwenden. Dabei wird berücksichtigt, welche "Bedeutung" die vorhandenen Einträge haben, insbesondere ob der jeweilige Eintrag schon öfter aufgrund von identischen dynamischen Befehlen verwendet worden ist und falls ja, wann dies zum letzten Mal der Fall war. Tatsächlich mit dem neuen Eintrag überschrieben wird dann derjenige vorhandene Eintrag, der die längste Zeit nicht mehr benutzt worden ist.

Wird eine neue Datenbanktransaktion begonnen, so werden alle Einträge in der Ergebnistabelle der Fig. 2a und der Buchführungstabelle der Fig. 2b gelöscht und die neuen Einträge beginnen wieder mit den Indices 21, 26 "i = 1".

## Patentansprüche

1. Verfahren
zur Verarbeitung eines Befehls einer Standardabfragesprache für eine Datenbank durch ein Computersystem mit Speichermitteln (10), wobei der Befehl während der Verarbeitung eine Vorbereitungsphase (14) und eine Ausführungsphase (16) durchläuft,
und wobei die Ausführungsphase (16) Ergebnisse (25) der Vorbereitungsphase (14) verwendet,
dadurch gekennzeichnet,
daß vor der Vorbereitungsphase (14) für den relevanten Befehl geprüft wird (31, 32), ob ein identischer Befehl früher schon einmal eine Vorbereitungsphase (14) durchlaufen hat, und daß, falls die Prüfung positiv ist, für den relevanten Befehl keine erneute Vorbereitungsphase (14) abläuft, sondern die Ausführungsphase (16) mit den abgespeicherten Ergebnissen (25) der früheren Vorbereitungsphase (14) durchlaufen wird (35).

2. Verfahren nach Anspruch 1,
dadurch gekennzeichnet,
daß, falls die Prüfung negativ ist, die Vorbereitungsphase (14) für den relevanten Befehl durchlaufen wird und deren Ergebnisse (25) abgespeichert werden (36).

3. Verfahren nach Anspruch 1 oder 2,
dadurch gekennzeichnet,
daß zur Prüfung, ob derselbe Befehl früher schon einmal eine Vorbereitungsphase (14) durchlaufen hat, Merkmale (20a, 20b) aus dem Befehl ermittelt werden (31),
und daß diese Merkmale (20a, 20b) mit früher auf entsprechende Weise ermittelten und abgespeicherten Merkmalen (20a, 20b) verglichen werden (32).

4. Verfahren nach Anspruch 3,
dadurch gekennzeichnet,
daß, falls der Vergleich positiv ist, die zu dem relevanten Befehl ermittelten Merkmale (20a, 20b) nicht erneut abgespeichert werden (35).

5. Verfahren nach Anspruch 3 oder 4, dadurch gekennzeichnet,
daß, falls der Vergleich negativ ist, die zu dem relevanten Befehl ermittelten Merkmale (20a, 20b) abgespeichert werden (36).

6. Verfahren nach Anspruch 2 und Anspruch 5, dadurch gekennzeichnet,
daß die abgespeicherten Ergebnisse (25) aus der Vorbereitungsphase (14) eines bestimmten Befehls und die abgespeicherten Merkmale (20a, 20b) desselben bestimmten Befehls einander zugeordnet werden (i).

7. Verfahren nach Anspruch 6,
dadurch gekennzeichnet,
daß die abgespeicherten Ergebnisse (25) und die abgespeicherten Merkmale (20a, 20b) nach dem "Least-Recently-Used" Prinzip in den Speichermitteln (10) des Computersystems verwaltet werden.

8. Computersystem
zur Verarbeitung eines Befehls einer Standardabfragesprache (z.B. SQL) für eine Datenbank, wobei der Befehl während der Verarbeitung eine Vorbereitungsphase (14) und eine Ausführungsphase (16) durchläuft,
und wobei die Ausführungsphase (16) Ergebnisse (25) der Vorbereitungsphase (14) verwendet,
mit Speichermitteln (10),
dadurch gekennzeichnet,
daß die Speichermittel (10) Merkmale (20a, 20b) von Befehlen enthalten, die früher schon einmal eine Vorbereitungsphase (14) durchlaufen haben,
und daß die Speichermittel (10) ebenfalls die Ergebnisse (25) derartiger früher durchlaufener Vorbereitungsphasen (14) enthalten.

9. Computersystem nach Anspruch 8, dadurch gekennzeichnet,
daß die zu bestimmten Befehlen gehörigen Merkmale (20a, 20b) und die zu denselben bestimmten Befehlen gehörigen Ergebnisse (25) der Vorbereitungsphase (14) einander zugeordnet sind.

10. Computersystem nach Anspruch 8 oder 9,
dadurch gekennzeichnet,
daß es sich bei den Merkmalen (20a, 20b) um Namen (20a) von Tabellen der Datenbank handelt, auf die sich der relevante Befehl beziehen soll, und/oder um Attribute (20b), die an den Benutzer ausgegeben werden sollen oder die durch den Befehl geändert werden sollen.

11. Computersystem nach einem der Ansprüche 8 bis 10,
dadurch gekennzeichnet,
daß es sich um einen dynamischen Befehl handelt.

12. Computersystem nach einem der Ansprüche 8 bis 11,
dadurch gekennzeichnet,
daß es sich um eine relationale Datenbank handelt.
